(19) 

**Europäisches Patentamt**
**European Patent Office**
**Office européen des brevets**

(11) **EP 3 755 655 B1**

(12) **EUROPEAN PATENT SPECIFICATION**

(45) Date of publication and mention
of the grant of the patent:
**01.10.2025 Bulletin 2025/40**

(21) Application number: **19705524.7**

(22) Date of filing: **18.02.2019**

(51) International Patent Classification (IPC):
**C01B 3/38** *(2006.01)* **C01B 3/48** *(2006.01)*

(52) Cooperative Patent Classification (CPC):
**C01B 3/382;** C01B 2203/0233; C01B 2203/0244;
C01B 2203/0288; C01B 2203/0405;
C01B 2203/0415; C01B 2203/043; C01B 2203/061;
C01B 2203/062; C01B 2203/068; C01B 2203/0838;
C01B 2203/127; C01B 2203/142; Y02P 30/00

(86) International application number:
**PCT/EP2019/053986**

(87) International publication number:
**WO 2019/162236 (29.08.2019 Gazette 2019/35)**

(54) **GAS PROCESSING**

GASVERARBEITUNG

TRAITEMENT DE GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.02.2018 GB 201802716**

(43) Date of publication of application:
**30.12.2020 Bulletin 2020/53**

(73) Proprietor: **Reinertsen New Energy AS
7049 Trondheim (NO)**

(72) Inventors:
• **RYTTER, Erling
7049 Trondheim (NO)**
• **REINERTSEN, Torklid Reime
7030 Trondheim (NO)**

(74) Representative: **J A Kemp LLP
80 Turnmill Street
London EC1M 5QU (GB)**

(56) References cited:
**WO-A1-2008/122399 WO-A1-2011/077107
WO-A1-2011/150253 WO-A1-2014/072679
US-A1- 2009 186 952 US-A1- 2010 310 949
US-A1- 2013 345 324**

## Description

### Field

The present disclosure relates to the production of hydrogen. More particularly, embodiments generate hydrogen by performing a gas-heated reforming process and an autothermal reforming process, with heat generated by the autothermal reforming process supplied to the gas-heated reforming process. Advantageously, the production of hydrogen is more efficient than known techniques. The hydrogen production process can also be integrated into other processes, such as methanol synthesis processes.

### Background

The greenhouse effect and the climate on earth are generally believed to be closely connected to human made emissions of carbon dioxide, $CO_2$. These emissions are primarily formed by combustion of coal and hydrocarbons, i.e. by generation of heat, electric power as well as use in internal combustion engines in vehicles. A desirable goal is to reduce the emission of $CO_2$ to the atmosphere. It is known art to reduce the emission of $CO_2$ from combustion of natural gas, e.g. by gas reforming and shift technology for preparation of a mixture consisting of hydrogen and carbon dioxide. These components are then separated, where after hydrogen is used for energy generation, heat or in different types of transportation, and carbon dioxide is deposited after compression to desired pressure. The deposition can be made on the bottom of the sea or in geological reservoirs, often called aquafers. The reservoirs can also contain hydrocarbons.

Hydrogen in the transport sector as fuel for fuel cells is gaining increased attention, and fueling stations for transportation vehicles are being deployed in several areas of the world, notably in the USA, Europe and Japan. Practically all of these fueling stations are based on hydrogen made by splitting water through electrolysis and compressing hydrogen to typically 700 bar. Liquid hydrogen is being considered for heavier transport like ships and trains. A problem with electrolysis is that it is expensive and also requires a substantial supply of electrical power. Electrolysis has been calculated as being at least twice as expensive as producing hydrogen by reforming natural gas. These calculations include separation and liquefaction of coproduced $CO_2$ and payment of tariffs for deposition of $CO_2$ in underground reservoirs. Another issue with water electrolysis is the calculation of its contribution to the greenhouse gas effect as required electricity may have been produced from hydrocarbons with significant emission of $CO_2$ to the atmosphere. Producing hydrogen from natural gas with $CO_2$ storage is therefore significantly advantageous over hydrogen production by electrolysis.

There are a number of factors that have prevented or postponed production of hydrogen for the transport sector from natural gas. One is that the location of the hydrogen production site should be at an appropriate distance from $CO_2$ storage facilities. Due to cost of scale, $CO_2$ storage in offshore underground reservoirs will have to be supplied by $CO_2$ from a number of $CO_2$ emitting facilities. There is also the matter of scale of the hydrogen production. As the demand for hydrogen presently is limited, hydrogen production facilities need to be small compared to what is regarded as world scale processing units. For example, a world scale methanol plant produces, say, 5000-10.000 metric tons/day. Comparing with a more moderately sized plant of 2500 tons/day, this corresponds to a hydrogen production of 400 metric tons/day. The hydrogen demand for one ferry or small cruise ship typically is in the range 1-5 metric tons/day of hydrogen, a hydrogen truck (Nikolai One) has reported a consumption of 4.6 kg per 100 km, and a small passenger train (Alstom Cordura) is designed for 94 kg hydrogen in one tank reaching 600 km.

There is a general need to improve known technology for hydrogen production from natural gas.

WO 2008/122399 A1 discloses background information.

WO 2011/150253 A1 discloses background information.

WO 2014/072679 A1 discloses background information.

WO 2011/077107 A1 discloses background information.

US 2009/186952 A1 discloses background information.

US 2013/345324 A1 discloses background information.

## Statements of invention

An aspect of the invention is set out in the appended independent claim. Optional features are set out in the appended dependent claims.

## List of Figures

Figure 1 shows a reforming process according to an embodiment;

Figure 2 shows a configuration of a methanol synthesis plant;

Figure 3 shows a configuration of a hydrogen production plant according to an embodiment;

Figure 4 shows a configuration of an integrated methanol and hydrogen plants according to an embodiment;

Figure 5 shows a configuration of an integrated methanol and hydrogen plants according to an embodiment; and

Figure 6 is a graph that shows the effect of the relative sizes of the methanol and hydrogen plants in integrated methanol and hydrogen plants according to embodiments.

**Description of Embodiments**

Embodiments provide a new method for producing hydrogen. Embodiments further include the integration of the method for producing hydrogen according to embodiments into other processes, in particular methanol synthesis processes. Advantageously, the integrated processes provide improved performance over individual processes.

Syngas is gas containing mainly $H_2$ and CO, with some $CO_2$ and unconverted $CH_4$, possibly some higher hydrocarbons and inert gases, and $H_2O$. Production and perspectives on syngas production has been described by J. R. Rostrup-Nielsen in Catalysis Today, volume 18, pages 305-324, 1993, and in volume 71, pages 243-247, 2002. There are several types of reformers for production of synthesis gas comprising steam reforming, autothermal reforming and partial oxidation. There are methods for producing synthesis gas by a combination of steam reforming and autothermal reforming. Combined reforming comprises steam reforming and autothermal reforming, normally in series. Gas heated reforming (GHR) utilizes hot gas, e.g. off-gas from autothermal reforming, to provide heat for reforming of a feed gas. GHR is described in a paper by K. J. Elkins et al. entitled "The ICI Gas-Heated Reformer (GHR) System" presented at the Nitrogen '91 International Conference, Copenhagen, June 1992.

In a preferred embodiment, cleaning and pre-treatment of natural gas is performed so that the gas feed mainly comprises methane after these processes. Such cleaning may comprise sulfur removal, e.g. in a ZnO absorber. Pre-treatment may comprise pre-reforming whereby higher hydrocarbons, such as ethane, are converted by steam to methane and $CO_2$. The reforming takes place at a pressure within the interval 10 to 200 bar. It is preferred to use a shift reactor when carrying out embodiments. Steam can be supplied to the shift reactor, but it can also be operated without supply of steam. At the outlet of the shift reactor a content on carbon basis of CO up to 2 % by volume, preferably 5% by volume, and methane with 2% by volume, preferably 5% by volume, is preferred.

The following chemical reactions take place by production of synthesis gas and hydrogen by reforming of natural gas:

$$CH_4 + H_2O = CO + 3\ H_2 \qquad \text{1. Steam reforming}$$

$$CH_4 + \tfrac{1}{2}\ O_2 = CO + 2\ H_2 \qquad \text{2. Partial oxidation}$$

$$CO + H_2O = CO_2 + H_2 \qquad \text{3. Shift reaction}$$

The heat of reaction for the strongly endothermic steam reforming can be provided either by external heating, as in a steam reformer, or by combination with the partial oxidation in an autothermal reformer. In a steam reformer (SR) natural gas (methane) is converted in a tube reactor at high temperature and relatively low pressure. A steam reformer comprises many reactor tubes, e.g. 200-250 tubes with typical lengths of 12-13 meters, inside diameter of about 10 cm and an outside diameter of about 12 cm. This is a space demanding unit with a length of 30-50 meters, width of 10-12 meters and a height of 15-20 meters. Conventional steam reformers are operated in the pressure range from 15 to 30 bar. The outlet temperature of the gas from a conventional steam reformer lies in the temperature area of 950 °C. The energy which is used to carry out the endothermic reactions is supplied by external firing/heating (top-, side-, bottom- or terrace-fired). The ratio between steam and carbon is from 2.5 to 3.5, and the ratio between hydrogen and carbon monoxide in the product stream is from 2.7 to 3.0. A typical synthesis gas produced from a steam reformer contains approximately 3% by volume of methane.

Alternatively, the reforming of natural gas (equation 1 and 2 above) can take place in an autothermal reformer (ATR). In an ATR natural gas (methane) is fed together with oxygen or air into a combustion chamber. The energy which is required to operate the endothermic steam reforming reactions is provided by the exothermic reactions between hydrocarbons and/or hydrogen and oxygen. The temperature in the combustion chamber can reach more than 2000 °C. After the combustion chamber the reactions are driven to equilibrium over a catalyst bed before the synthesis gas is leaving the reactor at approximately 1000-1050 °C. The size of such a unit could be a height of 10-15 meters and a diameter of 5-6 meters. Typical ratio of steam:carbon is from 0.6 to 1.4. The ratio between hydrogen and carbon monoxide in the exit gas is lower than 2. Typical methane slip, i.e. amount of unconverted methane, is 1-2% by volume in the product stream. The ATR can be operated at higher pressure than the SR. A further option for reforming natural gas is a partial oxidation reactor (POX) which also is an autothermal reformer except that the unit does not comprise a catalyst bed. The exit temperature for a POX is somewhat higher than for a typical ATR. Reforming of natural gas can also be made by combined reforming (CR) which is a combination of a steam reformer (SR) and an autothermal reformer (ATR). A combination of SR and ATR makes it possible to adjust the composition out of the reformer unit by regulating the efforts on the two reformers. SR is in CR operated at milder conditions, i.e. lower outlet temperature, which leads to a high methane slip. The residual methane is reacted in the ATR. The ratio steam:carbon is in the area 1.8-2.4, with a ratio between hydrogen and carbon monoxide in the product gas higher than 2.

From the above, it is clear that the reformer unit has a very large footprint (SR), and that the exit gas is at a high temperature, typically 950-1100 °C. Conventionally, the exit gas is cooled down rapidly using a waste-heat-boiler (WHB) that produces steam. Rapid cooling and using tubes with boiling water are important to be able to control material corrosion by metal dusting.

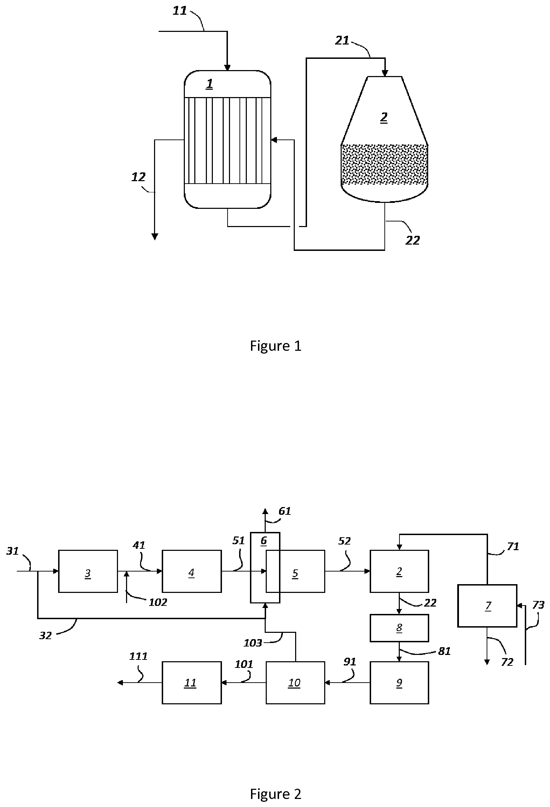

Figure 1 shows a more efficient reforming process according to an embodiment in which the hot exit gas is used to reform part of the natural gas before it enters the autothermal reformer.

It is only known for a combination of ATR with oxygen and a gas-heated-reformer (GHR) to be used in this way for production of methanol. However, the present inventor has found that the same GHR and ATR combination can be used in a hydrogen production process. The hydrogen production process comprises the separation of hydrogen and carbon dioxide after the reforming processes.

According to embodiments, instead of burning fuel gas to provide the heat for the reforming reactions, the hot, autothermally reformed gas 22 is used to heat the catalyst tubes in a GHR 1. The feed gas 11 first passes through the catalyst in the GHR, then the ATR 2 by stream 21 and finally the heating side of the GHR to provide the heat for the initial reaction. Thereby the exit temperature of the syngas 12 is reduced significantly to the range 500-600 °C and needs only moderate further cooling before WGS.

After reforming of the natural gas and cooling, the gas mixture according to embodiments is shifted. The gas mixture from the reformer reactor contains mainly the gas components CO, $H_2$, $H_2O$, $CO_2$ and some $CH_4$. Between these components there is an equilibrium relation given by the stoichiometric equation:

$$CO+H_2O=CO_2+H_2$$

This reaction is called the water-gas-shift reaction (WGS), and by operating a shift reactor at certain conditions the equilibrium can be forced to the right and a gas mixture is obtained which is rich in hydrogen and carbon dioxide, and where the concentration of carbon monoxide is low. Sufficient reaction velocity is provided by use of suitable catalysts, and in processes where a high degree of reaction of CO is desirable (e.g. ammonia synthesis) two fixed bed reactors are used in series, a high temperature shift reactor and a low temperature shift reactor, respectively. Two steps are chosen because the equilibrium is favored by low temperature, whereas the reaction velocity is favored by high temperature. By selecting two reactors working in series, a smaller total reactor volume is achieved. The process is nearly pressure independent and normally the same pressure as in the reformer is used. Typical temperature out of the first reactor is 420 °C. and out of the second reactor 230 °C. Catalyst in the first step is normally based on chromium/iron, whereas the catalyst in the second step normally is a copper/zinc catalyst. In the shift unit CO and $H_2O$ are reacted to $CO_2$ and $H_2$, and in known techniques it is often a requirement that the mentioned reaction to a highest possible degree is driven to the right, so that as little CO as possible is present in the gas mixture out of the shift unit. A low content of CO in the mentioned gas mixture again gives a high purity of the $H_2$-rich gas stream out of the separation unit. In known art the ratio $H_2O$:CO to the shift reactor is high, e.g. equal to 10:1, which gives a high conversion of CO. However, there are other process configurations where different arrangements of WGS are preferred. One such configuration is when hydrogen is separated by a palladium membrane. A Pd membrane requires a certain elevated temperature to operate efficiently. Therefore, only high-temperature WGS may be applied before the membrane. It is also possible to use low-temperature WGS after the membrane and partly recycle the shifted gas.

Gases in the mixture after the shift reactor or the shift reactors can be separated more or less completely based on the different properties of the gas molecules. The most common principles are absorption, adsorption, membranes and cryogenic distillation. $CO_2$ is an acid gas, and the most widely used method to separate the mentioned gas from other non-acid gas molecules is absorption. During absorption the different chemical properties of the gas molecules are utilized. By contacting the gas mixture with a basic liquid, the acid gases will to a high degree be dissolved in the liquid. The liquid is separated from the gas and the absorbed gas can then be set free either by altering the composition of the liquid or by altering pressure and temperature. For separation of $CO_2$, aqueous solutions of alcoholamines can be used. The absorption is taking place at a relatively low temperature and a high pressure, while stripping of the gas from the liquid is carried out at a relatively high temperature and low pressure. To liberate $CO_2$ from the amine phase in the stripping unit, stripping steam is usually used. If the partial pressure of $CO_2$ in the gas into the absorber is high, e.g. higher than 15 bar, it is possible to obtain high concentrations in the amine phase, and a large part of absorbed $CO_2$ can be set free in the stripping unit at elevated pressure, e.g. 5-8 bar. Other absorption technologies rely on alternative liquid absorbents like methanol at reduced temperature.

By the use of one or more semipermeable or dense membrane unit, like using a Pd-film, it is possible to achieve that molecules of different size and different properties permeate the membrane at different velocities. This principle can be utilized to separate gases. For the gas mixture in question membranes can be selected where $H_2$ permeates rapidly, whereas $CO_2$ permeates slowly or not at all, where after separation of the different gas components is achieved. The driving force over the membrane is difference in partial pressure, e.g. of hydrogen between the process gas and the permeate side of a Pd-membrane. As hydrogen in many cases is required at an elevated pressure, one preferred way to secure partial pressure difference is to use a sweep gas of steam at the permeate side and then condense out water afterwards, leaving hydrogen at a pressure comparable to the process gas. By combining solid membranes and liquid membranes it is also possible to achieve a rapid permeation of $CO_2$, while $H_2$ is kept back.

Another frequently used method in gas separation is pressure-swing adsorption (PSA). PSA is a technology used to separate some gas species from a mixture of gases under pressure according to the species' molecular characteristics and affinity for an adsorbent material. It is normally operated at near-ambient temperatures and differs significantly from cryogenic distillation techniques of gas separation. Specific adsorptive materials (e.g., zeolites, activated carbon, molecular sieves, etc.) are used as a trap, preferentially adsorbing the target gas species at high pressure. The process then swings to low pressure to desorb the adsorbed molecules. In the present mixture of gases, CO, CO2 and CH4 are adsorbed, letting the hydrogen pass through at process pressure. Not to overload the adsorbent, water is condensed before the PSA unit.

Embodiments include using any known technique for hydrogen and carbon dioxide separation.

In embodiments of the present invention it is desirable to deposit out-separated $CO_2$. Large amounts of $CO_2$ can be deposited according to various methods, such as deposition in very deep oceans, deposition in deep water geological reservoirs and deposition in oil reservoirs wherein the gas at the same time functions as drive agent for enhanced oil recovery. The two last mentioned storage methods are operated commercially. In these storage forms the $CO_2$ gas has to be brought to high pressure and in liquid form for transport in pipelines to a deposition well and further to injection. The injection pressure will vary, but could be in the range 50 to 300 bar. If the $CO_2$ gas can be separated from the $H_2/CO_2$ mixture at an elevated pressure, significant compression work can be avoided. However, it might be necessary to select between hydrogen and $CO_2$ to be collected at the high (process) pressure. Hydrogen pressure requirement varies with application, but high pressure or liquid hydrogen will be needed for storage and in transportation applications. As it is more demanding to pressurize hydrogen than $CO_2$, separation technologies that provide hydrogen at high pressure is sometimes preferred. This benefit can, however, be outweighed be the efficiency of a hydrogen permeable membrane.

Methanol is a commodity used for number of purposes, mainly as a feedstock for production of chemicals. These chemicals comprise formaldehyde, acetic acid and dimethyl ether. Another use is in the petrochemical industry for making olefins through the methanol-to-olefins route, or more selectively by methanol-to-propylene. Methanol is also used as a fuel or a fuel additive. Two widely different applications are in production of the gasoline additive MTBE (methyl-tertbutyl ether) and in manufacture of biodiesel through transesterification of triglycerides. Occasionally, methanol is used directly as a blending component in gasoline or diesel.

Methanol is for the large part produced from natural gas by first making syngas according to eqs. 1-3. Then methanol is produced over a copper based catalyst by the overall reaction

$$CO + 2H_2 \rightarrow CH_3OH. \qquad \text{4. Methanol synthesis from CO}$$

The mechanism is, however thought to be through $CO_2$;

$$CO_2 + 3 H_2 \rightarrow CH_3OH + H_2O \qquad \text{5. Methanol synthesis from } CO_2$$

$CO_2$ is partially formed in-situ in the reactor by the water-gas shift reaction

$$CO + H_2O \rightarrow CO_2 + H_2 \qquad \text{3. WGS}$$

but can also be provided externally. Often the feed contains a certain amount of $CO_2$ that has been formed by pre-reforming natural gas containing some higher alkanes, e.g. propane;

$$C_3H_8 + 2 H_2O \rightarrow 2 CH_4 + CO_2 + 2 H_2 \qquad \text{6. Pre-reforming}$$

It follows that the gas consumption in methanol synthesis is dictated by the stoichiometric number (SN):

$$SN = (P_{H2} - P_{CO2})/(P_{CO} + P_{CO2}) = 2$$

where P signifies partial pressure.

Figure 2 illustrates one typical configuration of a methanol synthesis plant. The natural gas 31 is pretreated in unit 3 that comprises sulfur removal followed by saturation with water. A small portion of the hydrogen rich stream 103 is added to the pretreated natural gas 41 and fed to the pre-reformer 4, ref. eq. 6. The pre-reformed gas 51 is fed to steam reformer 5 that encompasses a combustion chamber *6* to provide heat for the reaction in eq. 2, giving an exhausted gas 61 where carbon in the combined feed (*32+103*) has been combusted to $CO_2$. After partial conversion of methane, the gas 52 is fed to an autothermal reformer 2 for further conversion to the syngas 22 according to eqs. 1 and 3. Oxygen 71 from an air separation unit (7; ASU) is added to the ATR 2. The ASU separates cryogenically air 73 to oxygen and nitrogen 72, sometimes also producing noble gases like argon. Other means for air separation or producing oxygen enriched air are possible, typically using membranes. A steam reformer and an autothermal reformer in series is often called combined reforming (CR). The produced syngas (22) is cooled in a WHB 8 and in subsequent heat exchangers before the gas 81 is entering the methanol synthesis block 9. This synthesis block can contain one or several methanol synthesis reactors and means for gas mixing and recycle of syngas that is not converted to methanol. To suppress production of unwanted byproducts, the composition of the gas fed to the methanol reactor contains surplus hydrogen. The following separation block 10, which is supplied by 91, contains distillation units for separation of methanol and water. Unconverted syngas is partly used as fuel 103 for the SR and partly added before the pre-reformer *4* (102). Finally, methanol, from path 101, is stored 11 before being shipped 111 to customers.

The production of methanol and production of hydrogen have similarities in that both processes rely on reforming natural gas to a syngas mixture comprising major amounts of hydrogen and CO, with some $CO_2$ and residual methane and water. The present inventor has surprisingly found that these similarities call for novel ways of integration between such process units.

Examples of embodiments are provided below.

EMBODIMENT EXAMPLE 1

Production of hydrogen and $CO_2$ by GHR and ATR according to an embodiment of the present invention.

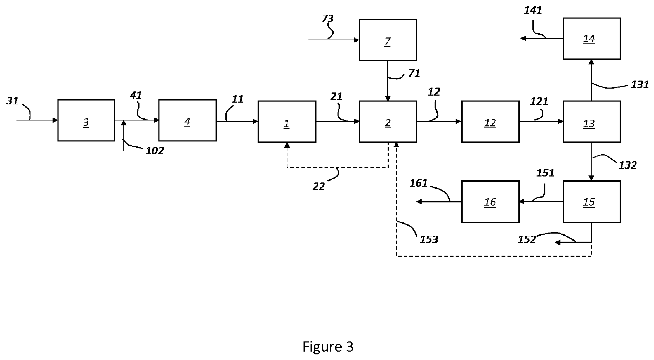

Figure 3 shows production of hydrogen and $CO_2$ by combination of ATR 2 and GHR 1 according to an embodiment.

Natural gas, NG, is fed in at 31. NG pretreatment 3 and pre-reforming 4 are performed as described in Figure 2 with units with corresponding reference signs.

The syngas production, by the ATR 2 and GHR 1, is as described in Figure 1 with units with corresponding reference signs. The heat recycle 22 is the exit gas from the ATR used to heat the GHR. Oxygen may be added to the ATR by an ASU 7, as described in Figure 2 with units with corresponding reference signs. It should be understood that embodiments include any other means for producing oxygen, or air enriched in oxygen, such as by using vacuum or pressure swing adsorption, or by using a membrane.

The produced syngas 12 is shifted to increase the content of hydrogen and $CO_2$ in one or more shift reactors 12, i.e. water gas shift reactor(s) 12, to produce the shifted gas 121. Steam may be added to the gas mixture before the gas mixture is input into the shift reactor(s) 12. The addition of steam increases the efficiency of the shift reaction. The shifted gas 121 may be subsequently cooled to remove its water content. Separation process 13 separates $CO_2$ 131 from the shifted gas, and the $CO_2$ is compressed 14 and optionally liquified. The produced $CO_2$ 141 may be stored at site, shipped for permanent storage or directly injected into a geological formation for storage. Hydrogen 151 is separated in the process 15, e.g. by PSA, that separates the hydrogen from the gas 132 that has already been depleted of $CO_2$ by the process 13. The separate outputs from the process 15 are hydrogen and a rest gas. The rest gas 152 contains remnants of CO and $CH_4$ together with unseparated $CO_2$ and hydrogen. As described in more detail later, the energy in the rest gas may be utilized for fuel in fired heater(s) for preheating of feed gases. At least a part of the rest gas is recycled 153 to the GHR 1 and/or ATR 2 for maximum carbon efficiency. Finally, the produced hydrogen is compressed and optionally liquified 16 before being transported to customers.

Process simulations of the flow-sheet in Figure 3 using the program HYSYS is based on natural gas with molar composition 88.8% methane, 5.6% ethane, 2.0% propane, 1.6% higher hydrocarbons, 1.5% $CO_2$ and 0.6% nitrogen. The gas is delivered at 48 barg and 400 °C, and after sulfur removal. Hydrogen specification is > 99.97 mol% for fuel cells, and specification for $CO_2$ is dry at > 95 mol%. Oxygen is supplied at 40 barg and 20°C. The simulations show that production of 100 kNm³/hr hydrogen requires 35.7 kNm³/hr of NG and 16.7 kNm³/hr of oxygen. 622 tons of $CO_2$ is captured each year, assuming that the PSA off-gas (152) is used for combustion and the exhaust gas $CO_2$ emitted to the atmosphere. This

gives a $CO_2$ capture efficiency of 95.4%. Electric power demand at 18.5 MW for compressors is delivered as renewable energy. Energy efficiency from natural gas to hydrogen is 80.4% based on lower heating values.

EMBODIMENT EXAMPLE 2

The use of both an ATR 2 and a GHR 1 in order to produce hydrogen and described in embodiment example 1 is compared with known techniques for producing hydrogen in Table 1.

**Table 1**

| Reformer | NG feed (kNm³/hr) | Oxygen feed (kNm³/hr) | Captured $CO_2$ (metric tons/yr) | Capture efficiency (%) | Energy efficiency (%) | Import power (MW) |
|---|---|---|---|---|---|---|
| **GHR + ATR** | 35.7 | 16.7 | 622 | 95.4 | 80.4 | 18.5 |
| **ATR** | 38.4 | 23.0 | 681 | 96.4 | 74.5 | 14.6 |
| **SR** | 42.0 | (air) | 682 | 95.0 | 74.0 | n.a. |
| n.a.: not available | | | | | | |

HYSYS simulations for production of 100 kNm³/hr hydrogen are provided in Table 1 for the techniques of embodiment example 1 as well as with known techniques.

The GHR 1 and ATR 2 combination according to an embodiment gives significantly lower consumption of natural gas, less $CO_2$ needs to be captured (capture efficiencies being approximately equal), and the energy efficiency is significantly improved. Compared to using only an ATR reformer, the GHR 1 and ATR 2 combination requires significantly less imported oxygen. SR has the highest NG consumption and will cost significantly more. The cost drivers in SR are the large reformers, the operation at a lower pressure, and most importantly, very cost demanding capture of $CO_2$ from flue gas.

EMBODIMENT EXAMPLE 3

In the present embodiment, both an ATR 2 and a GHR 1 are used to produce hydrogen and $CO_2$, as already described in embodiment example 1 with reference to Figure 3. The present embodiment further improves the efficiency of the overall processes by using the rest gas 152 that remains after the hydrogen separation process 15. The rest gas may alternatively be referred to as a tail gas or recycle gas.

The rest gas comprises three components. These are pre-treated natural gas 41 or pre-reformed natural gas 11 that has not been converted to syngas by the GHR and ATR processes; CO that has not been shifted in the shift reactor; and $CO_2$ and hydrogen constituents left after the respective separation processes 13 and 15. The first of these components arise mainly due to equilibrium restrictions in reforming methane to CO and hydrogen. The higher the temperature in the reforming process, the lower the amount of methane is left unconverted. The second component of the rest gas is CO that due to equilibrium or kinetic limitations has not been shifted to $CO_2$. The last component of the rest gas, gas constituents left after separation, is due to inadequate separation of $CO_2$ and hydrogen as 100% separation seldom can be achieved; with the possible exception of when dense separation membranes are used.

The rest gas 152 and/or 153 may therefore comprise any of $CH_4$, CO, $H_2$ and $CO_2$ as well as possible traces of water and some inert gasses, such as nitrogen. The present embodiment comprises using the energy rich components of the rest gas. For example, the rest gas may be used as a fuel in fired heater(s) for the preheating of the feed gas at one or more of the stages that process the feed gas. The feed gas, that may be natural gas, may be heated at one or more of: immediately prior to its input into the pre-treatment 3, immediately prior to its input into the pre-reformer 4 and immediately prior to its input into the GHR 1. The rest gas may also be used as a fuel for generating steam 102 that is added before the pre-reformer and before the WGS reactor 12.

The rest gas may also be used as a fuel for a separate gas turbine, for example to generate electricity.

The rest gas 153 is recycled by feeding it back to the ATR 2, shown by 153 in Figure 3, and/or to the GHR 1, to improve the carbon utilization efficiency. A purge of inert gasses may be applied to the gas stream 153 so that a large amount of inert gasses do not accumulate.

The energy in the rest gas is therefore used to advantageously increase the efficiency of the processes.

EMBODIMENT EXAMPLE 4

According to a particularly preferred embodiment, the production of hydrogen is integrated with the production of methanol.

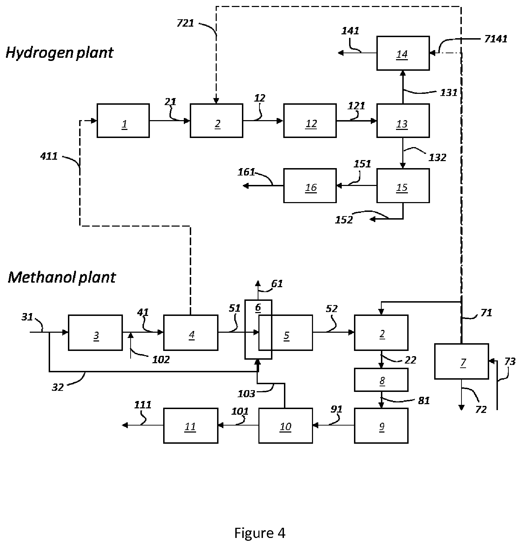

Process integration between a methanol plant and a hydrogen plant, that is preferably smaller than the methanol plant, is shown in Figure 4. The dashed lines illustrate that, if spare capacity is available or decision to reduce methanol production capacity has been made, that pre-treated NG 411 can be imported to the hydrogen plant. The figure shows import from the pre-reformer 4, but the input can be from any stage from the arrival of NG at the production site. Further, another dashed line 721 shows that produced oxygen in the ASU of the methanol plant is used in the ATR of the hydrogen plant. Also illustrated, by a dotted dash line 7141, is that extra cooling capacity of the ASU, in the form of oxygen or nitrogen, can be used to cool down the captured $CO_2$; alternatively, this capacity can be used to cool down hydrogen.

Embodiments include a number of other ways in which the methanol and hydrogen plants can be integrated, such as safety systems, nitrogen blanketing, harbor facilities, maintenance etc.

Advantageously, by integrating a methanol plant and a hydrogen plant, the overall efficiency of both methanol and hydrogen production is improved over the individual efficiencies of separate methanol and hydrogen plants. In addition, the production of methanol is flexible and, by changing the amount of hydrogen production, the amount of methanol production can be increased or decreased as may be required by both supply and demand fluctuations. Similarly, the production of hydrogen is flexible and, by changing the amount of methanol production, the amount of hydrogen production can be increased or decreased as may be required by both supply and demand fluctuations.

EMBODIMENT EXAMPLE 5

According to a particularly preferred embodiment, the production of hydrogen is integrated with the production of methanol. That is to say, the hydrogen generated by the hydrogen plant may also be flexibly provided to the methanol plant.

The techniques of embodiment example 5 may be performed either on their own or in addition to those of embodiment example 4.

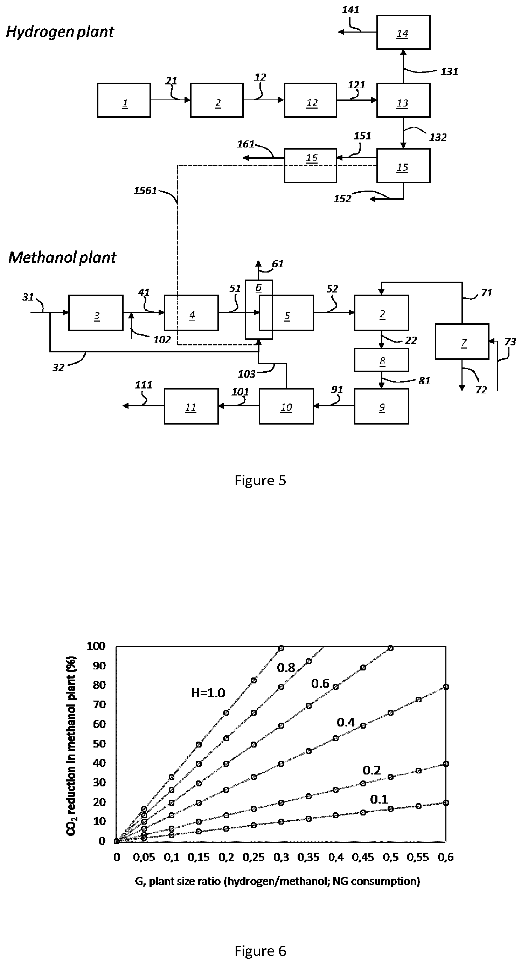

It is preferable to have an additional sink of hydrogen other than the main purpose of the hydrogen plant, which would typically be transporting or containing the generated hydrogen for use elsewhere. According to embodiment example 5, an additional possible use of the generated hydrogen is as fuel gas for the combustion chamber 6 in the methanol plant, as shown in Figure 5.

Figure 5 shows a dotted hydrogen supply line 1561 that connects the PSA unit 15 with the chamber 6. Preferably, compression and/or cooling of the hydrogen in unit 16, is avoided, and/or reduced, and this is a further energy saving.

EMBODIMENT EXAMPLE 6

According to a particularly preferred embodiment, the techniques of the embodiment example 5 are used to reduce $CO_2$ emissions from a methanol plant.

Using the principle of the hydrogen outlet to the method plant as shown in Figure 5, and considering hydrogen production plants of different sizes, it is possible to target a certain reduction in $CO_2$ emission in the methanol plant. Most of this emission comes from the burners in the steam reformer and, as an acceptable approximation, it can be assumed that all $CO_2$ emissions comes from the SR.

A simple relationship between reduction in $CO_2$ emission from a methanol plant, size of separate hydrogen plant and fraction of hydrogen produced used in the SR burners was found to be:

$$R = k*G*H$$

R is percent reduction in overall $CO_2$ emission during methanol synthesis, G is the NG consumption in the hydrogen plant relative to the methanol plant, H is the fraction of produced hydrogen directed to the SR burners, and k is a parameter specific to the methanol plant at hand. For a given methanol plant employing combined reforming, the parameter k was found to be 330. Calculations using this value of k are shown in Figure 6.

Figure 6 shows effect of the relative sizes of the methanol and hydrogen plants. For example, to reach a $CO_2$ reduction of 33% the product G*H must be 0.1. If all produced hydrogen is directed to the methanol plant, this target is achieved with a hydrogen plant using 10% of the NG used to produce methanol. If 80% of the hydrogen is exported and only 20% used in the SR, the hydrogen plant size in terms of natural gas consumption must be half of the petrochemical plant to achieve the same goal.

It follows that the product G*H, in the design and operation of a hydrogen plant integrated with a methanol plant according to embodiments, can be chosen to advantageously reduce greenhouse gas emissions from a methanol plant.

Embodiments include a number of modifications and variations to the above described techniques.

For example, embodiments are not restricted to a hydrogen production plant being integrated with a methanol plant and the hydrogen plant may alternatively be integrated with other types of plant, such as one or more of a nitrogen production plant, Fischer-Tropsch synthesis plant, an oil refinery, an air-separation plant or petrochemical plant.

The size of the gas-heated reformer in terms of natural gas usage may be 0.5-30% of a typical world scale methanol plant, alternatively 1-20%, further alternatively 1.5-15%.

The product G*H may be at least 0.02, preferably above 0.05, more preferably above 0.1 and most preferably above 0.2.

Figure 3 shows hydrogen and carbon dioxide being separated for a gas mixture in the separated process 13 and 15. Embodiments also include the hydrogen being separated from the gas mixture before the carbon dioxide is separated from the gas mixture, or the hydrogen and carbon dioxide may be separated from the gas mixture at the same time in a single process. The separated carbon dioxide may be used, stored and/or deposited in a geological reservoir.

**Claims**

1. A method of producing hydrogen, the method comprising:

   receiving a feed gas that is natural gas; and
   performing reforming processes so as to generate hydrogen in dependence on the feed gas;
   wherein the reforming processes comprise both a gas-heated reforming process and an autothermal reforming process; and
   heat generated by the autothermal reforming process is supplied to the gas-heated reforming process;
   wherein the method is performed in a hydrogen production plant that is integrated with one or more further processing plants; and
   wherein the method further comprises performing a water-gas-shift process on the gas output from the reforming processes;
   performing a carbon dioxide separation process that separates carbon dioxide from the shifted gas; and
   performing a hydrogen separation process that separates hydrogen to generate hydrogen and a rest gas;
   wherein the rest gas comprises any feed gas that was not converted by the reforming processes, any carbon monoxide that was not converted to carbon dioxide by the water-gas-shift process, any carbon dioxide that was not separated by the carbon dioxide separation process, and any hydrogen that was not separated by the hydrogen separation processes;
   wherein the method further comprises feeding at least part of the rest gas into the autothermal reforming process and/or the gas-heated reforming process.

2. The method according to claim 1, further comprising:

   optionally saturating the received feed gas with at least water; and
   pre-reforming the gas to generate a pre-reformed gas;
   wherein the reforming processes are performed on the pre-reformed gas.

3. The method according to claim 2, the method further comprising adding a hydrogen rich stream to the received feed gas before the feed gas is input to the pre-reforming process.

4. The method according to any of claims 2 or 3, further comprising removing sulfur from the received feed gas prior to saturating the received feed gas with water; and
   wherein, optionally, ZnO is used to remove sulfur from the feed gas.

5. The method according to any preceding claim, wherein the one or more further processing plants include any of a methanol synthesis plant, a nitrogen production plant, a plant for Fischer-Tropsch synthesis, an oil refinery, an air-separation plant and a petrochemical plant.

6. The method according to any preceding claim, further comprising:

   supplying at least part of any product that is generated in the hydrogen production plant to at least one of the one or more of the further processing plants that the hydrogen production plant is integrated with such that the supplied product can be used by the at least one of the one or more of the further processing plants; and/or
   supplying at least part of any product that is generated in at least one of the one or more of the further processing plants that the hydrogen production plant is integrated with to the hydrogen production plant such that the supplied product can be used by the hydrogen production plant.

7. The method according to any preceding claim, further comprising providing the autothermal reforming process with:

oxygen from an air separation unit such as a cryogenic air separation unit;
oxygen or oxygen enriched air from a membrane air separation unit; and/or
oxygen from a pressure or vacuum swing adsorption unit; and/or
wherein the autothermal reforming process is supplied with oxygen from an air separation unit that is part of a methanol synthesis plant or a nitrogen production plant.

8. The method according to any preceding claim, wherein the further processing plant is a methanol synthesis plant and all, or part of, the separated hydrogen is used to adjust the stoichiometric number of the methanol synthesis plant so that the stoichiometric number is 2.0.

9. The method according to any preceding claim, wherein, in use, all, or part of, the separated hydrogen is used to reduce carbon dioxide emission from an auxiliary processing plant, optionally the hydrogen being added to burners of a fired heater and, optionally, the burners are part of a steam reformer.

10. The method according to any preceding claim, wherein at least part of the rest gas is used as a fuel for one or more of:

pre-heating one or more of the feed gas, the gas input to a pre-treatment process, the gas input to a pre-reforming process and the gas input to the gas-heated reforming process;
generating steam that is used in a pre-reforming process and/or is added to the gas stream input to a water gas shift reactor; and
powering a gas turbine.

**Patentansprüche**

1. Verfahren zur Herstellung von Wasserstoff, wobei das Verfahren umfasst:

Empfangen eines Einsatzgases, das Erdgas ist; und
Durchführen von Reformierungsprozessen, um in Abhängigkeit von dem Einsatzgas Wasserstoff zu erzeugen;
wobei die Reformierungsprozesse sowohl einen gasbeheizten Reformierungsprozess als auch einen autothermen Reformierungsprozess umfassen; und
die durch den autothermen Reformierungsprozess erzeugte Wärme dem gasbeheizten Reformierungsprozess zugeführt wird;
wobei das Verfahren in einer Wasserstoffproduktionsanlage durchgeführt wird, die mit einer oder mehreren Weiterverarbeitungsanlagen integriert ist; und
wobei das Verfahren ferner umfasst: Durchführen eines Wassergas-Shift-Prozesses an dem aus den Reformierungsprozessen ausgegebenen Gas;
Durchführen eines Kohlendioxid-Trennprozesses, der Kohlendioxid aus dem Shift-Gas abtrennt; und
Durchführen eines Wasserstoff-Trennprozesses, der Wasserstoff abtrennt, um Wasserstoff und ein Restgas zu erzeugen;
wobei das Restgas Folgendes umfasst: jegliches Einsatzgas, das durch die Reformierungsprozesse nicht umgewandelt wurde, jegliches Kohlenmonoxid, das durch den Wasser-Gas-Shift-Prozess nicht zu Kohlendioxid umgewandelt wurde, jegliches Kohlendioxid, das durch den Kohlendioxid-Trennprozess nicht abgetrennt wurde, und jeglicher Wasserstoff, der durch die Wasserstoff-Trennprozesse nicht abgetrennt wurde;
wobei das Verfahren ferner umfasst, mindestens einen Teil des Restgases dem autothermen Reformierungsprozess und/oder dem gasbeheizten Reformierungsprozess zuzuführen.

2. Verfahren nach Anspruch 1, das ferner Folgendes umfasst:

optionales Sättigen des empfangenen Einsatzgases mit mindestens Wasser; und
Vorreformieren des Gases, um ein vorreformiertes Gas zu erzeugen;
wobei die Reformierungsprozesse an dem vorreformierten Gas durchgeführt werden.

3. Verfahren nach Anspruch 2, wobei das Verfahren ferner das Hinzufügen eines wasserstoffreichen Stroms zu dem empfangenen Einsatzgas umfasst, bevor das Einsatzgas in den Vorreformierungsprozess eingegeben wird.

4. Verfahren nach einem der Ansprüche 2 oder 3, ferner umfassend das Entfernen von Schwefel aus dem empfangenen Einsatzgas vor dem Sättigen des empfangenen Einsatzgases mit Wasser; und wobei optional ZnO verwendet wird, um Schwefel aus dem Einsatzgas zu entfernen.

5. Verfahren nach einem der vorhergehenden Ansprüche, wobei die eine oder mehreren weiteren Verarbeitungsanlagen eine Methanolsyntheseanlage, eine Stickstoffproduktionsanlage, eine Anlage zur Fischer-Tropsch-Synthese, eine Ölraffinerie, eine Luftzerlegungsanlage und eine petrochemische Anlage enthalten.

6. Verfahren nach einem der vorhergehenden Ansprüche, das ferner Folgendes umfasst:

   Zuführen mindestens eines Teils eines Produkts, das in der Wasserstoffproduktionsanlage erzeugt wird, an mindestens eine der einen oder mehreren der weiteren Verarbeitungsanlagen, mit denen die Wasserstoffproduktionsanlage integriert ist, so dass das zugeführte Produkt von der mindestens einer der einen oder mehreren der weiteren Verarbeitungsanlagen verwendet werden kann; und/oder
   Zuführen mindestens eines Teils eines Produkts, das in mindestens einer der einen oder mehreren der weiteren Verarbeitungsanlagen erzeugt wird, mit denen die Wasserstofferzeugungsanlage integriert ist, zu der Wasserstofferzeugungsanlage, so dass das zugeführte Produkt von der Wasserstofferzeugungsanlage verwendet werden kann.

7. Verfahren nach einem der vorhergehenden Ansprüche, ferner umfassend das Versorgen des autothermen Reformierungsprozesses mit:

   Sauerstoff aus einer Luftzerlegungsanlage, wie einer kryogenen Luftzerlegungsanlage;
   Sauerstoff oder mit Sauerstoff angereicherter Luft aus einer Membranluftzerlegungsanlage; und/oder
   Sauerstoff aus einer Druck- oder Vakuum-Wechseladsorptionsanlage; und/oder
   wobei der autotherme Reformierungsprozess mit Sauerstoff aus einer Luftzerlegungsanlage versorgt wird, die Teil einer Methanolsyntheseanlage oder einer Stickstoffproduktionsanlage ist.

8. Verfahren nach einem der vorhergehenden Ansprüche, wobei die Weiterverarbeitungsanlage eine Methanolsyntheseanlage ist und der gesamte oder ein Teil des abgetrennten Wasserstoffs verwendet wird, um die stöchiometrische Zahl der Methanolsyntheseanlage so einzustellen, dass die stöchiometrische Zahl 2,0 beträgt.

9. Verfahren nach einem der vorhergehenden Ansprüche, wobei im Betrieb der gesamte oder ein Teil des abgetrennten Wasserstoffs verwendet wird, um die Kohlendioxidemissionen einer Hilfsverarbeitungsanlage zu reduzieren, wobei optional der Wasserstoff den Brennern einer befeuerten Heizvorrichtung zugeführt wird und optional die Brenner Teil eines Dampfreformers sind.

10. Verfahren nach einem der vorhergehenden Ansprüche, wobei mindestens ein Teil des Restgases als Brennstoff für eines oder mehrere der Folgenden verwendet wird:

   Vorwärmen eines oder mehrerer der Folgenden: des Einsatzgases, des in einen Vorbehandlungsprozess eingespeisten Gases, des in einen Vorreformierungsprozess eingespeisten Gases und des in den gasbeheizten Reformierungsprozess eingespeisten Gases;
   Erzeugen von Dampf, der in einem Vorreformingprozess verwendet und/oder der in einen Wassergas-Shift-Reaktor eingespeisten Gasstrom zugegeben wird; und
   Antreiben einer Gasturbine.

**Revendications**

1. Procédé de production d'hydrogène, le procédé comprenant :

   la réception d'un gaz d'alimentation consistant en du gaz naturel, et
   la réalisation de processus de reformage afin de générer de l'hydrogène en fonction du gaz d'alimentation ;
   les processus de reformage comprenant un processus de reformage chauffé au gaz ainsi qu'un processus de reformage autothermique, et

la chaleur générée par le processus de reformage autothermique étant fournie au processus de reformage chauffé au gaz,

le procédé étant réalisé dans une installation de production d'hydrogène qui est intégrée à une ou plusieurs installations de traitement ultérieur, et

le procédé comprenant en outre : la réalisation d'un processus de conversion du gaz à l'eau sur le gaz issu des processus de reformage,

la réalisation d'un processus de séparation du dioxyde de carbone qui sépare le dioxyde de carbone du gaz converti, et

la réalisation d'un processus de séparation d'hydrogène qui sépare l'hydrogène pour générer de l'hydrogène et un gaz résiduel ;

ledit gaz résiduel comprenant tout gaz d'alimentation qui n'a pas été converti par les processus de reformage, tout monoxyde de carbone qui n'a pas été converti en dioxyde de carbone par le processus de conversion du gaz à l'eau, tout dioxyde de carbone qui n'a pas été séparé par le processus de séparation du dioxyde de carbone, et tout hydrogène qui n'a pas été séparé par les processus de séparation d'hydrogène ;

le procédé comprenant en outre l'introduction d'au moins une partie du gaz résiduel dans le processus de reformage autothermique et/ou dans le processus de reformage chauffé au gaz.

2. Procédé selon la revendication 1, comprenant en outre :

la saturation éventuelle du gaz d'alimentation reçu avec au moins de l'eau, et
le pré-reformage du gaz pour générer un gaz pré-reformé ;
les processus de reformage étant réalisés sur le gaz pré-reformé.

3. Procédé selon la revendication 2, le procédé comprenant en outre l'ajout d'un flux riche en hydrogène au gaz d'alimentation reçu avant que le gaz d'alimentation ne soit introduit dans le processus de pré-reformage.

4. Procédé selon l'une quelconque des revendications 2 et 3, comprenant en outre l'élimination du soufre du gaz d'alimentation reçu, avant la saturation du gaz d'alimentation reçu avec de l'eau, et
du ZnO étant éventuellement utilisé pour éliminer le soufre du gaz d'alimentation.

5. Procédé selon l'une quelconque des revendications précédentes, dans lequel la ou les installations de traitement ultérieur comprennent une quelconque installation parmi une installation de synthèse du méthanol, une installation de production d'azote, une installation de synthèse Fischer-Tropsch, une raffinerie de pétrole, une installation de séparation d'air et une installation pétrochimique.

6. Procédé selon l'une quelconque des revendications précédentes, comprenant en outre :

la fourniture d'au moins une partie de tout produit généré dans l'installation de production d'hydrogène à au moins une des une ou plusieurs installations de traitement ultérieur auxquelles l'installation de production d'hydrogène est intégrée, de façon que le produit fourni puisse être utilisé par l'au moins une des une ou plusieurs installations de traitement ultérieur, et/ou
la fourniture, à l'installation de production d'hydrogène, d'au moins une partie de tout produit généré dans au moins une des une ou plusieurs installations de traitement ultérieur auxquelles l'installation de production d'hydrogène est intégrée, de façon que le produit fourni puisse être utilisé par l'installation de production d'hydrogène.

7. Procédé selon l'une quelconque des revendications précédentes, comprenant en outre la fourniture, au processus de reformage autothermique :

d'oxygène provenant d'une unité de séparation d'air telle qu'une unité de séparation d'air cryogénique,
d'oxygène ou d'air enrichi en oxygène provenant d'une unité de séparation d'air à membrane, et/ou
d'oxygène provenant d'une unité d'adsorption à variation de pression ou de vide ; et/ou
le processus de reformage autothermique étant fourni en oxygène provenant d'une unité de séparation d'air qui fait partie d'une installation de synthèse du méthanol ou d'une installation de production d'azote.

8. Procédé selon l'une quelconque des revendications précédentes, dans lequel l'installation de traitement ultérieur est une installation de synthèse du méthanol et tout ou partie de l'hydrogène séparé sert à ajuster le nombre stœchiométrique de l'installation de synthèse du méthanol de façon que le nombre stœchiométrique soit de 2,0.

9. Procédé selon l'une quelconque des revendications précédentes, dans lequel, lors de l'utilisation, tout ou partie de l'hydrogène séparé sert à réduire les émissions de dioxyde de carbone provenant d'une installation de traitement auxiliaire, l'hydrogène étant éventuellement ajouté à des brûleurs d'un appareil de chauffage à combustion et les brûleurs faisant éventuellement partie d'un vaporeformeur.

10. Procédé selon l'une quelconque des revendications précédentes, dans lequel au moins une partie du gaz résiduel sert de combustible pour l'un ou plusieurs des usages suivants :

le préchauffage du gaz d'alimentation, du gaz introduit dans un processus de prétraitement, du gaz introduit dans un processus de pré-reformage et/ou du gaz introduit dans le processus de reformage chauffé au gaz,
la génération de vapeur servant à un processus de pré-reformage et/ou ajoutée au flux de gaz introduit dans un réacteur de conversion du gaz à l'eau, et
l'alimentation d'une turbine à gaz.

Figure 1

Figure 2

Figure 3

Figure 4

Figure 5

Figure 6

**EP 3 755 655 B1**

**REFERENCES CITED IN THE DESCRIPTION**

**Patent documents cited in the description**

- WO 2008122399 A1
- WO 2011150253 A1
- WO 2014072679 A1
- WO 2011077107 A1
- US 2009186952 A1
- US 2013345324 A1

**Non-patent literature cited in the description**

- **J. R. ROSTRUP-NIELSEN**. *Catalysis Today*, 1993, vol. 18, 305-324
- **K. J. ELKINS et al.** The ICI Gas-Heated Reformer (GHR) System. *Nitrogen '91 International Conference, Copenhagen*, June 1992